# EUROPEAN PATENT APPLICATION

(11) **EP 2 602 039 A1**
(43) Date of publication of application: **12.06.2013**
(21) Application number: 12195376.4
(22) Date of filing: 04.12.2012
(51) Int. Cl.: B23C 3/34, B23D 3/04, B23D 5/02, B23C 3/30

(54) **A method of forming a slot in an article**

(30) Priority: 08.12.2011 GB 201121056
(71) Applicant: Rolls-Royce plc, London SW1E 6AT (GB)
(72) Inventor: Charlesworth, Alan, Derby, DE56 4FL (GB)
(74) Representative: Roberts, Nicholas John

(57) **Abstract**

A method of forming a slot (4) in an disc (3) for use in a gas turbine. The method includes providing a rough formed slot (4) with a V configuration and then milling the slot (4) using a conical milling tool (6) or an angled cylindrical tool to provide undulations in the wall of the slot (4). The milling tool (6) traverses through the slot (4) following a trochoidal path.

## Description

The invention relates to a method of forming a slot in a component and particularly to a method of machining a slot in a turbomachinery disc.

Turbomachines, for example gas turbines, have compressors and turbines which may have discs which are joined to form appropriate compressor or turbine assemblies. The discs have shaped slots around their periphery which accommodate the complimentarily shaped roots of blades to secure the blade whilst the disc rotates. Each disc may have slots with a unique design.

The present invention seeks to provide an improved method of manufacturing a disc with slots.

According to a first aspect of the invention there is provided a method of milling a slot in an article, the method comprising the steps of providing an article having a rough slot having side walls and a base, the slot extending through the article and tapering in a reducing manner as the slot extends into the interior of the article from an outer periphery of the article, and traversing a mill tool through the slot in a trochoidal motion.

A milling tool may be used with teeth which are described in EP1153685 or EP2121243.

Preferably the slot has a line of symmetry bisecting a base of the slot and a mid point between the end of walls of the slot at the outer periphery of the article and the walls diverge from the line of symmetry.

The milling tool is preferably conical and the angle of divergence of the cone is preferably the same as the angle of divergence of the slot.

The milling tool may have one or more teeth protruding from the cone of the milling tool.

The milling tool may be cylindrical and has an axis of rotation, the axis of rotation being slanted with respect to the line of symmetry of the slot.

Preferably the slant is parallel to the angle at which the walls diverge from the line of symmetry. The milling tool may have one or more teeth protruding from the cylinder of the milling tool.

The slot is rough-formed by a method selected from the group of wire cutting, grinding, shaping, electro discharge machining, laser cutting, water jet machining, broaching and any other suitable method.

The article may be a disc and the slot extends through the disc from a front surface of the disc to a rear surface of the disc. Preferably the walls of the slot are undulated to have peaks and troughs

The base of the slot may be bulbous and may be formed by drilling one or more holes through the disc before the slot is formed.

According to a second aspect of the invention there is provided a method of milling a finished asymmetrical trough of a predetermined profile in a surface, the method comprising presenting a first rotating milling tool to the surface to mill a rough formed trough of smaller dimensions than the finished trough and subsequently presenting a second milling tool to the rough formed trough to remove material from the surface to provide the finished trough, wherein the method provide a substantially constant depth of material between the profile of the rough formed trough and the finished trough.

A constant depth is advantageous as it minimises disparity in the surface wear of the milling tool and provides a more uniform surface integrity to the trough.

Preferably the substantially constant depth is measured across at least 60% of the predetermined profile.

The invention will now be described by way of example only with reference to the accompanying drawings, in which:

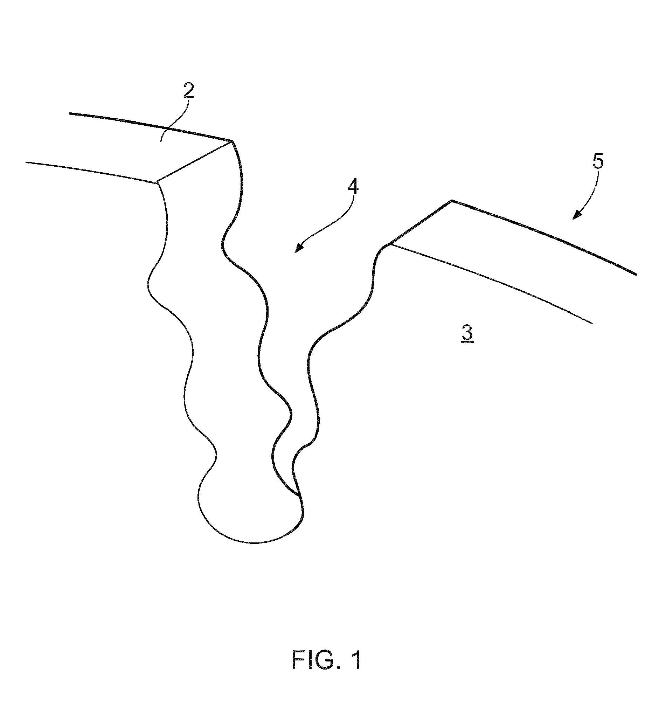

Fig. 1 depicts a turbine disc 2 for a gas turbine having a slot 4 which is generically known as a fir-tree. The slot has walls which converging to provide a base to the slot.

Each wall has undulations which provide a profile having a series of maxima and minima. A blade root (not shown) has a profile which is complementary with the profile of the slot so that when the blade root is within the slot it is secured during operation of the disc.

The disc is rotatable about an axis and has a first surface 3 axially displaced from a second surface 5 by the width of the disc w. The slot extends through the disc from the first surface to the second surface. The slot may be angled or curved such that the opening to the slot on the first face is in a different circumferential location to the opening to the slot on the second face.

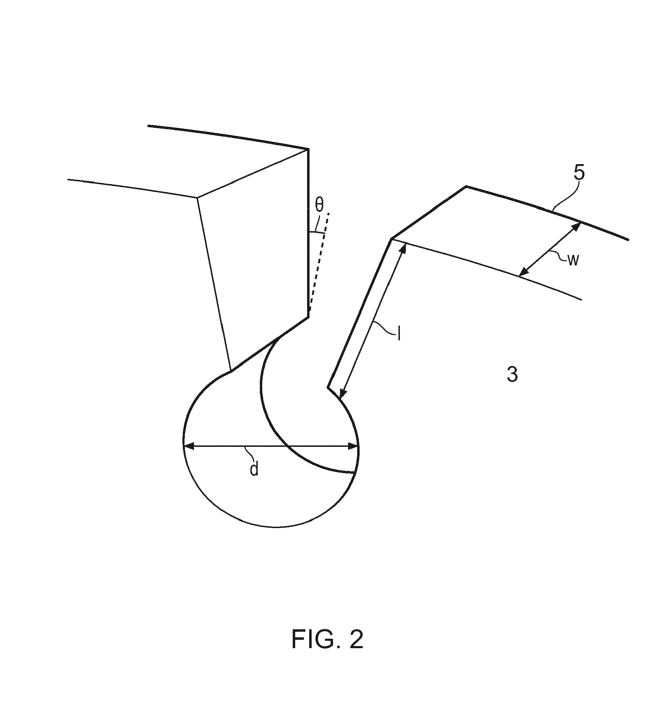

Methods for forming the slot 4 is described with reference to Figures 2 to 10. In Figure 2 a V-shaped slot is formed in the disc with a size that is slightly smaller than that of the intended finished slot. The slot, at the apex of the V, is provided with a circular or oval hole that extends through the disc from the first face 3 to the second face 5. In a preferred method of manufacture the hole is first drilled through the disc and the V-shaped slot cut from the periphery to the hole using a non-contact cutting method such as wire cutting, electro discharge machining (EDM) or electro chemical machining (ECM). The V-shaped slot is initially rough formed using one of these methods so as to reduce wear on a milling or broaching tool which can significantly add to the cost of the machining process.

In one embodiment of a nickel disc the hole is circular with a diameter d of between 8mm and 10mm, the width of the disc w is 30mm, the length I of the V-shaped slot from the disc periphery to the hole is 15 to 25mm and the angle e between the true radial direction and the slot wall is between 10° and 14°.

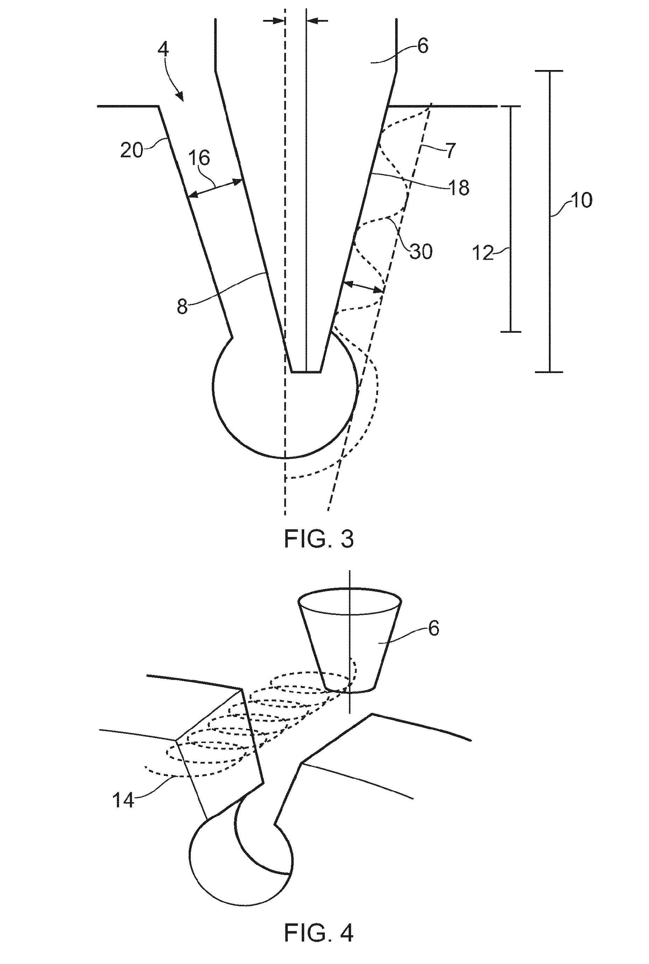

The V-shaped slot of Figure 2 is further machined as shown in Figure 3 using a conical milling tool 6 which has a central axis about which the tool rotates. The angle of the milling face 8 to the axis of the tool is the same as the angle of the finished firtree slot 7 makes to the radial line 8 on the disc which bisects the slot 4 (however other angles may be appropriate for certain slot forms). The length 10 of the milling tool is greater than the depth of the angled faces of the slot to allow the whole length of the slot to be milled in a single pass of the milling tool through the slot from the front face of the disc to the rear face of the disc.

The tool is CNC controlled to pass through the slot in a trochoidal or orbiting cutter path 14 depicted in Figure 4. The tool is narrower than the slot by a gap 16 which, in this embodiment is between 2 and 3mm. The gap 16 is selected to offer good milling. A large diameter milling tool offers better cutting action but too small a gap significantly increases tool wear and makes it difficult to control tool speed. Where a large gap is used the tool diameter must be smaller which can lead to reduced stiffness and instability or wobble in the rotation of the tool.

One benefit of using trochoidal milling is that a slot width larger than the cutting diameter of the tool can be machined. This means that several slot widths can be provided using the same tool diameter in an efficient way. Since a small radial depth of cut is used, cutters with close pitch can be applied, leading to higher feed speed and cutting speed than with ordinary slot milling applications

The cutting path is continuous as the tool passes from the front face of the disc to the rear face. Accordingly, the tool repeatedly alternates between milling a first side 18 and a second side 20 of the slot. As the tool has a period between milling the first side and milling the second side where no milling occurs a high speed of rotation can be maintained with little variation in milling velocity. The process also allows for efficient swarf removal from the walls into the slot.

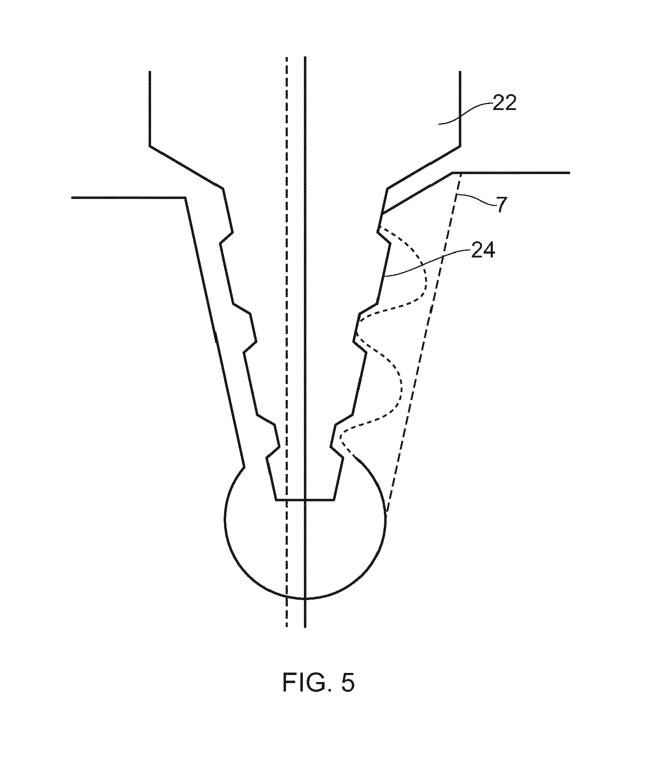

The undulations in the side walls which are used to secure the blade root are formed in subsequent steps one of which is shown in Figure 5. The tool 22 is different to that used earlier in the process but is still of generally conical form having a taper angle which is the same as or similar to the taper angle of the slot. Teeth 24 protrude from the side of the tool and have a form which approximates a rectangular chip. The undulations are machined in two or more steps so the teeth protrude less than the intended depth of the undulation. In this embodiment the teeth protrude between 25 and 40% of the intended depth of the finished undulation. By machining the undulations in two or more steps it is possible to optimise the depth of each cut in order to control variation in cutting speed and to share tool wear across the tools which increase the relative life of each tool by sharing the wear across a relatively large surface area.

The tool is CNC controlled to pass through the slot in either a straight path or in a trochoidal or orbiting cutter path. The cutting path is continuous as the tool passes from the front face of the disc to the rear face, but where the path is trochoidal the tool repeatedly alternates between milling a first side 18 and a second side 20 of the slot. Advantageously, where the tool has a period between milling the first side and milling the second side where no milling occurs a high speed of rotation can be maintained with little variation in milling velocity.

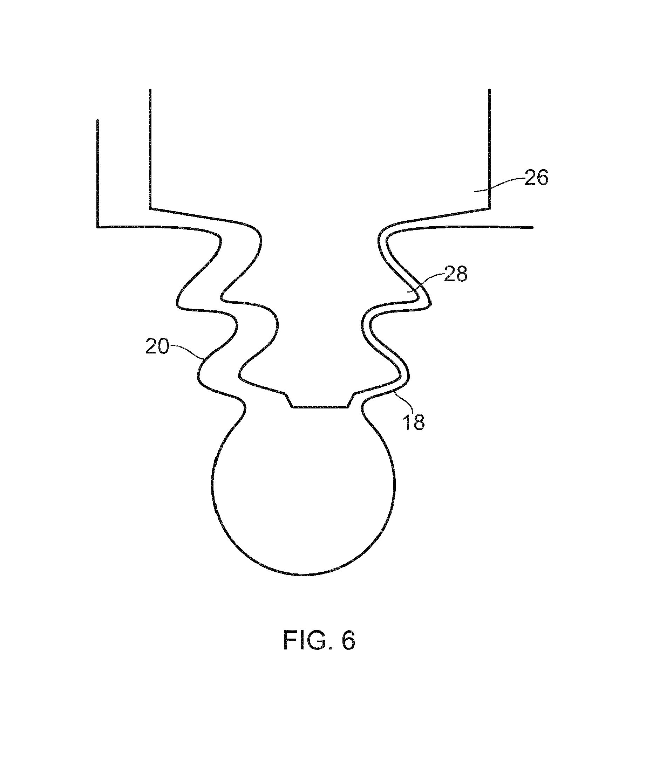

A further exemplary step for forming the undulations in the side walls which are used to secure the blade root is shown in Figure 6. The tool 26 is different to that used earlier in the process but is still of generally conical form having a taper angle which is similar to the taper angle of the slot. Teeth 28 protrude from the side of the tool and have a form which mills the undulations to a form that approximates the finished valley and leaves approximately 0.1 to 0.4mm of material to be removed in a finishing step.

The tool is CNC controlled to pass through the slot in either a straight path or in a trochoidal or orbiting cutter path. The cutting path is continuous as the tool passes from the front face of the disc to the rear face, but where the path is trochoidal the tool repeatedly alternates between milling a first side 18 and a second side 20 of the slot. Advantageously, where the tool has a period between milling the first side and milling the second side where no milling occurs a high speed of rotation can be maintained with little variation in milling velocity.

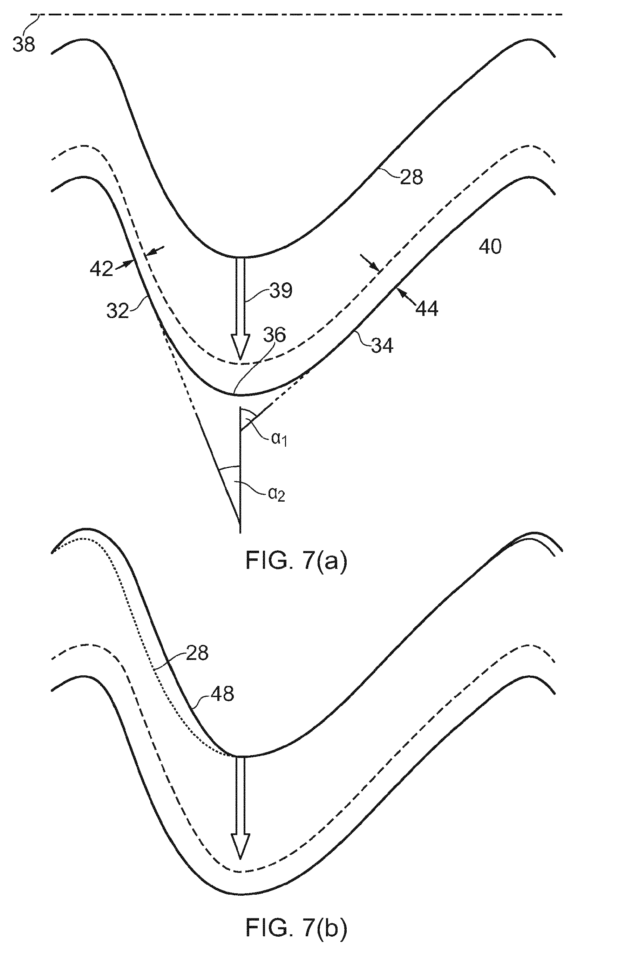

The undulations in the side walls comprise a series of peaks and troughs with the troughs having asymmetry in that one of the walls tends towards the base of the trough at a steeper angle than the other wall. Figure 7 (a) and (b) show one such trough 30 (Fig. 3) rotated clockwise by 90°. The first wall 32 tends towards the base of the trough 36 at a steeper angle α₂ than the second wall 34 which tends towards the base at angle α₁.

The tooth 28 of the milling tool traverses towards the undulation in a direction that is orthogonal to the axis of rotation 38 of the tool as depicted by arrow 39. It has been found that for an asymmetrical trough it is desirable that the tool tooth profile 28 is preferably not identical to that of the finished trough 34. In Figure 7(a) the milling tool tooth 28 has the profile of the trough 34 and is traversed through the disc in a trochoidal motion as described above to cut the trough to a part finished depth 40 forming rough formed trough and which requires a subsequent final dressing stage to complete the side wall 34 of the slot. As may be seen in Figure 7(a) the depth of material 42 that requires removal from the first wall 32 is significantly less than the depth of material 44 that requires removal from the second wall 34. What has been found is that the difference in thickness means that tool wear on the finishing tool is uneven requiring more frequent tool repair. It has also been found that where there is a large disparity in the amount of material to be removed around the tooth there is a higher probability of surface damage where the gap is small.

Preferably the gap and the material to be removed is the same across at least 60% of the profile of the rough formed slot.

To overcome this unevenness the profile of the tool tooth 48 is modified to be different to that of the finished trough so that a uniform volume of material is left to be removed around the finishing tool. The modified cutting tooth 48 and a tooth profile 28 which matches the finished trough is shown side by side in Figure 7(b).

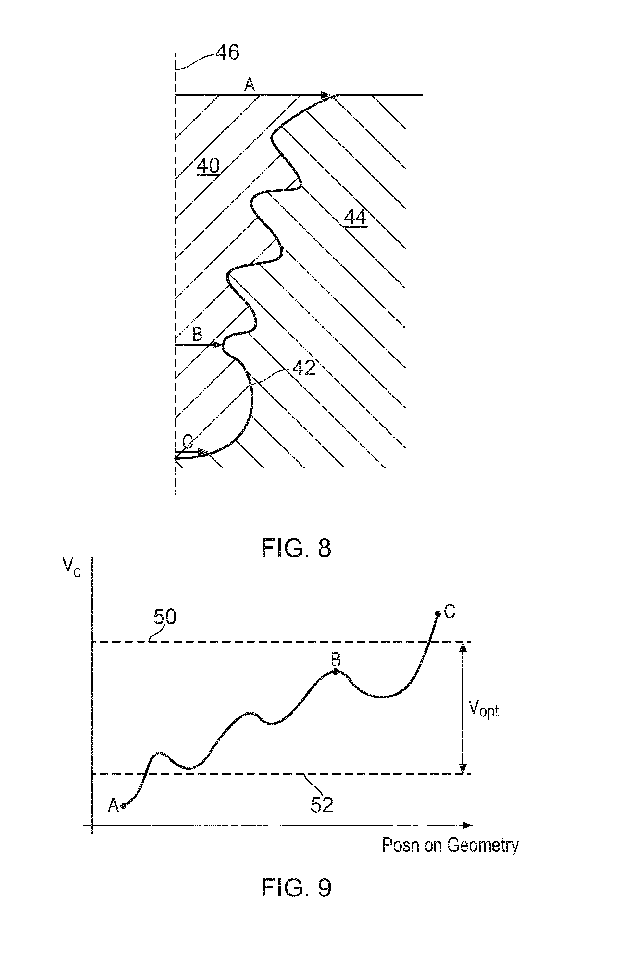

In an alternative embodiment the rotational axis of one or more of the milling tools is angled relative to the true radius of the disc and angled relative to a line bisecting the slot. Figure 8 depicts a typical firtree slot 42 in a disc 44 with one half of a milling tool 40 presented thereto. The distance from the axis 46 of the tool to the slot wall 42 is marked at three points A, B and C. The relative surface velocity of the rotating tool to the disc material is different at each point due to the difference in radius from the tool axis 46 to the periphery thereof.

The relative surface velocity is graphically depicted in Figure 9 with the upper and lower bounds of the optimal relative surface velocity (Vₒₚₜ) shown by the dashed lines 50, 52. At the extremes of the tool, where the radius is at its largest or smallest it is common for the relative velocity to fall outside the Vₒₚₜ range. Outside the Vₒₚₜ range there may be higher tool wear, surface damage to the slot wall or a sub optimal surface finish.

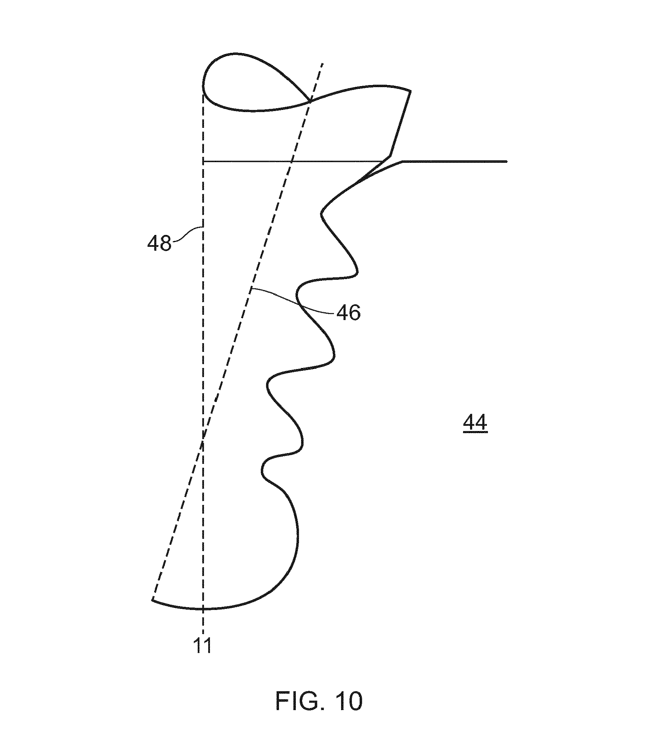

An angled tool is depicted in Figure 10 where the axis of rotation 46 of the tool is angled relative to the true radius 48 of the disc 44. The angling of the axis of rotation need not be at the same angle as the general slope of the V slot but has the effect of bringing the extremes of the relative surface velocities closer together. Such a reduction in the bounds permits more, if not all of the relative surface velocities to be operated within the range of Vₒₚₜ. It will be understood that for this arrangement the trochoidal motion cannot be used where the tool moves across the whole slot and that a first side is cut using the tool in a first pass and then the opposite side is cut using the, or another similar tool, in a second pass.

It will be appreciated that other milling or process steps may be interspersed between the above described steps. For example a separate base and / or bulb finish or semi finish may be needed to ensure that the base and / or bulb have the desired profile.

## Claims

1. A method of milling a slot (4) in an article (3), the method comprising the steps of providing an article having a rough slot having side walls and a base, the slot extends through the article and tapers in a reducing manner as the slot extends into the interior of the article from an outer periphery of the article, and traversing a mill tool (6) through the slot in a trochoidal motion.

2. A method according to claim 1, wherein the slot has a line of symmetry bisecting a base of the slot and a mid point between the end of walls of the slot at the outer periphery of the article and the walls diverge from the line of symmetry.

3. A method according to claim 2, wherein the milling tool is conical.

4. A method according to claim 3, wherein the angle of divergence of the cone is the same as the angle of divergence of the slot.

5. A method according to claim 3 or claim 4, wherein the milling tool has one or more teeth (24) protruding from the cone of the milling tool.

6. A method according to claim 2, wherein the milling tool is cylindrical.

7. A method according to claim 6, wherein the milling toll has an axis of rotation, the axis of rotation being slanted with respect to the line of symmetry.

8. A method according to claim 7, wherein the slant is parallel to the angle at which the walls diverge from the line of symmetry.

9. A method according to any preceding claim, wherein the slot is rough-formed by a method selected from the group of wire cutting, electro discharge machining, laser cutting, water jet machining, and / or broaching.

10. A method according to any preceding claim, wherein the article is a disc and the slot extends through the disc from a front surface of the disc to a rear surface of the disc.

11. A method according to claim 10, wherein the walls of the slot are undulated to have peaks and troughs

12. A method according to claim 10 or claim 11, wherein the base of the slot is bulbous.

13. A method according to claim12, wherein the base of the slot is formed by drilling a hole through the disc before the slot is formed.

14. A method of milling a finished asymmetrical trough of a predetermined profile in a surface, the method comprising presenting a first rotating milling tool to the surface to mill a rough formed trough of smaller dimensions than the finished trough and subsequently presenting a second milling tool to the rough formed trough to remove material from the surface to provide the finished trough, wherein the method provide a substantially constant depth of material between the profile of the rough formed trough and the finished trough.

15. A method according to claim 14, wherein the substantially constant depth is measured across at least 60% of the predetermined profile.
